(19) 

**Europäisches Patentamt**
**European Patent Office**
**Office européen des brevets**

(11) **EP 4 667 515 A1**

(12) **EUROPEAN PATENT APPLICATION**
published in accordance with Art. 153(4) EPC

(43) Date of publication:
**24.12.2025 Bulletin 2025/52**

(21) Application number: **25748652.2**

(22) Date of filing: **29.01.2025**

(51) International Patent Classification (IPC):
*C08J 9/12* (2006.01)    *B32B 5/18* (2006.01)
*B32B 27/30* (2006.01)    *C08F 8/20* (2006.01)
*C08F 14/18* (2006.01)    *C08K 3/38* (2006.01)
*C08K 5/52* (2006.01)    *C08K 5/521* (2006.01)
*C08L 27/12* (2006.01)    *C08L 101/00* (2006.01)
*H01B 7/02* (2006.01)

(52) Cooperative Patent Classification (CPC):
**B32B 5/18; B32B 27/30; C08F 8/20; C08F 14/18;**
**C08J 9/12; C08K 3/38; C08K 5/52; C08K 5/521;**
**C08L 27/12; C08L 101/00; H01B 7/02**

(86) International application number:
**PCT/JP2025/002741**

(87) International publication number:
**WO 2025/164648 (07.08.2025 Gazette 2025/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **30.01.2024  JP 2024012076**
**06.09.2024  JP 2024153925**

(71) Applicants:
• **National University Corporation**
**Yamagata University**
**Yamagata-shi, Yamagata 990-8560 (JP)**
• **Daikin Industries, Ltd.**
**Osaka-shi, Osaka 530-0001 (JP)**

(72) Inventors:
• **NISHIOKA, Akihiro**
**Yonezawa-shi, Yamagata 992-8510 (JP)**

• **KODA, Tomonori**
**Yonezawa-shi, Yamagata 992-8510 (JP)**
• **OKUYAMA, Kenta**
**Yonezawa-shi, Yamagata 992-8510 (JP)**
• **TOKUDA, Masato**
**Osaka-Shi, Osaka 530-0001 (JP)**
• **ISHII, Kenji**
**Osaka-Shi, Osaka 530-0001 (JP)**
• **MUKAE, Hirofumi**
**Osaka-Shi, Osaka 530-0001 (JP)**
• **KOMORI, Masaji**
**Osaka-Shi, Osaka 530-0001 (JP)**
• **KISHIKAWA, Yosuke**
**Osaka-Shi, Osaka 530-0001 (JP)**
• **YAMAUCHI, Akiyoshi**
**Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **RESIN COMPOSITION FOR FOAM MOLDING, INTERLAYER INSULATOR, LAYERED BODY, AND FOAMED ELECTRIC WIRE**

(57)    The present disclosure aims to provide a foam molding resin composition, an interlayer insulator, a laminate, and a foam electric wire, all of which have a good foamed state. The foam molding resin composition of the present disclosure contains a melt-moldable fluororesin, the foam molding resin composition having a maximum biaxial elongational viscosity of $1 \times 10^5$ to $1 \times 10^7$ Pa·s.

EP 4 667 515 A1

**Description**

TECHNICAL FIELD

The disclosure relates to foam molding resin compositions, interlayer insulators, laminates, and foam electric wires.

BACKGROUND ART

In high-speed communication cables (electric wires), the signal frequency is high and signal attenuation is large. Covering materials are desired to have a reduced permittivity.
The use of foamed fluorine materials is a known method for such reduction in permittivity (see Patent Literatures 1 to 3).

CITATION LIST

- Patent Literature

Patent Literature 1: JP 2019-112563 A
Patent Literature 2: CN 116144127 A
Patent Literature 3: WO 2006/123694

SUMMARY OF INVENTION

- Technical Problem

The disclosure aims to provide a foam molding resin composition, an interlayer insulator, a laminate, and a foam electric wire, all of which have a good foamed state.

- Solution to Problem

The disclosure (1) relates to a foam molding resin composition containing a melt-moldable fluororesin, the foam molding resin composition having a maximum biaxial elongational viscosity of $1 \times 10^5$ to $1 \times 10^7$ Pa·s.
The disclosure (2) relates to the foam molding resin composition according to the disclosure (1), wherein the fluororesin has a melt flow rate of 1 to 100 g/10 min.
The disclosure (3) relates to the foam molding resin composition according to the disclosure (1) or (2), further containing a different resin other than the fluororesin.
The disclosure (4) relates to the foam molding resin composition according to the disclosure (3), wherein the different resin has a melt flow rate of less than 1 g/10 min.
The disclosure (5) relates to the foam molding resin composition according to the disclosure (3) or (4), wherein the different resin is polytetrafluoroethylene.
The disclosure (6) relates to the foam molding resin composition according to any one of the disclosures (3) to (5), wherein the foam molding resin composition contains more than 0.15% by mass and 3% by mass or less of the different resin.
The disclosure (7) relates to the foam molding resin composition according to the disclosure (6), wherein the foam molding resin composition contains 0.2 to 1% by mass of the different resin.
The disclosure (8) relates to the foam molding resin composition according to any one of the disclosures (1) to (7), wherein the fluororesin has a melting point of 250°C or higher.
The disclosure (9) relates to the foam molding resin composition according to any one of the disclosures (1) to (8), wherein the fluororesin is a tetrafluoroethylene/hexafluoropropylene copolymer.
The disclosure (10) relates to the foam molding resin composition according to any one of the disclosures (1) to (9), wherein the fluororesin has a $-CF_3$ end group.
The disclosure (11) relates to the foam molding resin composition according to any one of the disclosures (1) to (10), the foam molding resin composition containing 80 to 99.99% by mass of the fluororesin.
The disclosure (12) relates to the foam molding resin composition according to the disclosure (11), the foam molding resin composition containing 97% by mass or more and less than 99.85% by mass of the fluororesin.

The disclosure (13) relates to the foam molding resin composition according to any one of the disclosures (1) to (12), further containing a foam nucleating agent.

The disclosure (14) relates to the foam molding resin composition according to the disclosure (13), wherein the foam nucleating agent is boron nitride and/or sodium 2,2'-methylenebis(4,6-di-t-butylphenyl) phosphate.

The disclosure (15) relates to the foam molding resin composition according to the disclosure (13) or (14), wherein the foam molding resin composition contains 0.1 to 10% by mass of the foam nucleating agent.

The disclosure (16) relates to the foam molding resin composition according to the disclosure (15), wherein the foam molding resin composition contains 0.1 to 3% by mass of the foam nucleating agent.

The disclosure (17) relates to the foam molding resin composition according to any one of the disclosures (1) to (16), comprising substantially no low molecular weight fluorocompound.

The disclosure (18) relates to an interlayer insulator formed using the foam molding resin composition according to any one of the disclosures (1) to (17).

The disclosure (19) relates to a laminate including: a conductor; and a foam layer on the conductor, the foam layer being formed using the foam molding resin composition according to any one of the disclosures (1) to (17).

The disclosure (20) relates to a foam electric wire including: a conductor; and a foam insulating layer on the conductor, the foam insulating layer being formed using the foam molding resin composition according to any one of the disclosures (1) to (17).

- Advantageous Effects of Invention

The disclosure can provide a foam molding resin composition, an interlayer insulator, a laminate, and a foam electric wire, all of which have a good foamed state.

BRIEF DESCRIPTION OF THE DRAWINGS

FIG. 1 is a circuit diagram of a device used in an improved bubble method.
FIG. 2 is a detailed view of a resin mounting portion.

DESCRIPTION OF EMBODIMENTS

The disclosure is specifically described hereinafter.

A foam molding resin composition of the disclosure contains a melt-moldable fluororesin and has a maximum biaxial elongational viscosity of $1 \times 10^5$ to $1 \times 10^7$ Pa·s.

The foam molding resin composition of the disclosure contains the melt-moldable fluororesin and has the maximum biaxial elongational viscosity in the above range, resulting in reduced cell coalescence and a good foamed state.

The good foamed state is a foamed state advantageous in reducing permittivity, including, for example, the state where fine cells are uniformly dispersed.

A melt-moldable fluororesin usually has a high melting point and low viscosity, which makes measurement of elongational viscosity difficult. Therefore, in the disclosure, the biaxial elongational viscosity is measured (calculated) by an improved bubble method described below.

The improved bubble method is Yamagata University's newly developed test method, in which a melted resin undergoes gas blowing to form a bubble. After measuring the cross sectional area of the bubble with a high-speed camera, the biaxial elongational viscosity is calculated by the following formula.

[Math. 1]

$$\eta_{BI} = \frac{r_b{}^2}{2V_r}\left[\frac{P_{in} - P_0}{\Delta r} - \rho\frac{d^2}{dt^2}r_b\right]$$

$\eta_{BI}$: Biaxial elongational viscosity (Pa·s)
$r_b$: Radius of bubble (m)
$V_r$: Time derivative of $r_b$
$P_{in}$: Internal pressure of bubble (Pa)
$P_0$: Atmospheric pressure (Pa)

Δr: Bubble film thickness(m)
ρ: Melt density (kg/m³)
t: Time (s)

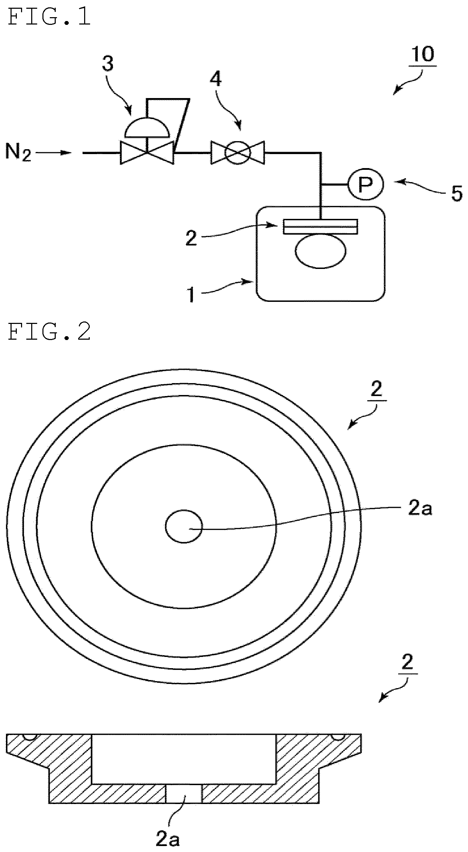

FIG. 1 and FIG. 2 each show an example of a device used in the improved bubble method. FIG. 1 is a circuit diagram of the device used in the improved bubble method and FIG. 2 is a detailed view of a resin mounting portion.

FIG. 1 and FIG. 2 show a device 10 containing an electric furnace 1 and a resin mounting portion 2 inside the electric furnace 1. A specimen (resin) is heated and melted inside the electric furnace 1. Then, with the blow of nitrogen gas, the melted resin is ejected out from an opening 2a on the bottom of the resin mounting portion 2, forming a bubble. A regulator 3, a ball valve 4, and a pressure sensor 5 are provided in the route from a nitrogen gas inlet to the electric furnace 1.

Specific operating procedures of the improved bubble method are as described below:

(1) hot press-molding the resin composition at 360°C into a sheet form with a thickness of 1 mm and slow-cooling the sheet to a temperature not higher than the crystallization temperature thereof;
(2) cutting the sheet into a 25 mm diameter specimen;
(3) preheating an electric furnace to a temperature of not lower than the measurement temperature;
(4) confirming that the temperature of the resin mounting portion inside the electric furnace has reached a temperature of not lower than the measurement temperature and placing the specimen on the resin mounting portion;
(5) after the specimen melts, once the temperature reaches the measurement temperature, expanding it with nitrogen gas into a bubble (balloon), and at this time, observing the expanding behavior with a high-speed camera (VW-600C available from Keyence Corporation) and measuring the pressure ($P_{in}$ - $P_0$) of nitrogen gas with a pressure sensor;
(6) sampling and weighing the bubble alone;
(7) analyzing the video of the bubble taken from the side using the high-speed camera, from when the bubble starts to emerge from the resin mounting portion, to capture the image one frame before bursting of the expanded bubble, determining, in the image, the cross-sectional area of the resin exposed from the resin mounting portion, and determining the equivalent radius of a circle having such a cross-sectional area as a radius ($r_b$) of the bubble;
(8) based on the measurement results, calculating the biaxial elongational viscosity ($\eta_{BI}$) using the above formula. In the formula, the time derivative ($V_r$) of $r_b$ is substituted with the rate of change of the cell radius ($r_b$) over time. The bubble film thickness (Δr) is calculated based on (volume of specimen/bubble surface area). The melt density (ρ) is the density of the specimen at the measurement temperature. Other values are measured values.

The biaxial elongational viscosity calculated by the improved bubble method tends to increase as the bubble expands. When the maximum biaxial elongational viscosity measured by this method is $1 \times 10^5$ to $1 \times 10^7$ Pa·s, the foam molding resin composition of the disclosure has a good foamed state. With such a finding, the present invention has been completed. The maximum biaxial elongational viscosity is preferably $1.5 \times 10^5$ Pa·s or higher, more preferably $2 \times 10^5$ Pa·s or higher, still more preferably $2.5 \times 10^5$ Pa·s or higher, further preferably $3 \times 10^5$ Pa·s or higher, even more preferably $3.5 \times 10^5$ Pa·s or higher, even more preferably $4 \times 10^5$ Pa·s or higher, and preferably $1 \times 10^6$ Pa·s or lower, more preferably $9.5 \times 10^5$ Pa·s or lower, still more preferably $9 \times 10^5$ Pa·s or lower, further preferably $8.5 \times 10^5$ Pa·s or lower, even more preferably $8 \times 10^5$ Pa·s or lower, even more preferably $7.5 \times 10^5$ Pa·s or lower, and even more preferably $7 \times 10^5$ Pa·s or lower, even more preferably $6.5 \times 10^5$ Pa·s or lower, and even more preferably $6 \times 10^5$ Pa·s or lower.

The minimum biaxial elongational viscosity is not limited and is theoretically 0, but it may be 2.

The biaxial elongational viscosity is increased by broadening the molecular weight distribution of the resin used. One method to broaden the molecular weight distribution is to dimerize the resin. When dimerizing, the biaxial elongational viscosity increases due to the close entanglement of molecules with different chain lengths, more specifically, due to good dispersion and significant differences in molecular chain lengths. When using a resin with a high molecular weight, good dispersion is particularly preferable. When the maximum diameter of the dispersed resin is 10 μm or less, the biaxial elongational viscosity is sufficiently high. Co-coagulation, described later, is effective for highly dispersing a high molecular weight resin in the composition.

Additionally, the biaxial elongational viscosity can be increased by crosslinking the resin.

If agglomerates or other components such as fillers are present in the resin, the biaxial elongational viscosity decreases due to ruptures at the interface during expansion.

Hereinafter, the melt-moldable fluororesin used in the foam molding resin composition of the disclosure is cited as a fluororesin (A).

The fluororesin (A) may be any melt-moldable one. Examples thereof include tetrafluoroethylene (TFE)/hexafluoropropylene (HFP) copolymers (FEP), TFE/perfluoro(alkyl vinyl ether) (PAVE) copolymers (PFA), TFE/ethylene copolymers (ETFE), chlorotrifluoroethylene (CTFE)/ethylene copolymers (ECTFE), polyvinylidene fluoride (PVdF), polychlorotrifluoroethylene (PCTFE), TFE/vinylidene fluoride (VdF) copolymers (VT), polyvinyl fluoride (PVF), TFE/VdF/CTFE copolymers (VTC), TFE/ethylene/HFP copolymers, and TFE/HFP/VdF copolymers. One of them may be used alone or two or more of them may be used in combination.

Examples of the PAVE include perfluoro(methyl vinyl ether) (PMVE), perfluoro(ethyl vinyl ether) (PEVE), and perfluoro(propyl vinyl ether) (PPVE). PPVE is preferred. One of them may be used alone or two or more of them may be used in combination.

The fluororesin (A) may have an additional polymerized unit derived from another monomer in an amount that causes no deterioration in the essential properties of the respective fluororesins. Such an additional monomer can appropriately be selected from TFE, HFP, ethylene, propylene, perfluoro(alkyl vinyl ethers), perfluoroalkylethylenes, hydrofluoroolefins, fluoroalkylethylenes, perfluoro(alkyl allyl ethers), and the like. One of them may be used alone or two or more of them may be used in combination. Such a perfluoroalkyl group in the additional monomer preferably has 1 to 10 carbon atoms.

Because of their excellent heat resistance, the fluororesin (A) is preferably at least one selected from the group consisting of TFE/HFP copolymers, TFE/PAVE copolymers, and TFE/ethylene copolymers, and is more preferably a TFE/HFP copolymer. Because of its more excellent electrical properties, the fluororesin (A) is also preferably a perfluororesin.

The TFE/HFP copolymer preferably satisfies a TFE/HFP mass ratio of 80 to 97/3 to 20, more preferably 84 to 92/8 to 16.

The TFE/HFP copolymer may be a copolymer consisting of TFE and HFP, or may be a terpolymer consisting of TFE, HFP, and a comonomer copolymerizable with TFE and HFP (e.g., a TFE/HFP/PAVE copolymer).

The TFE/HFP copolymer is also preferably a TFE/HFP/PAVE copolymer including a polymerized unit derived from PAVE.

The TFE/HFP/PAVE copolymer preferably satisfies a TFE/HFP/PAVE mass ratio of 70 to 97/3 to 20/0.1 to 10, more preferably 81 to 92/5 to 16/0.3 to 5.

The TFE/PAVE copolymer preferably satisfies a TFE/PAVE mass ratio of 90 to 99/1 to 10, more preferably 92 to 97/3 to 8.

The TFE/ethylene copolymer preferably satisfies a TFE/ethylene mole ratio of 20 to 80/20 to 80, more preferably 40 to 65/35 to 60. The TFE/ethylene copolymer may include another monomer component.

In other words, the TFE/ethylene copolymer may be a copolymer consisting of TFE and ethylene, or may be a terpolymer consisting of TFE, ethylene, and a comonomer copolymerizable with TFE and ethylene (e.g., a TFE/ethylene/HFP copolymer).

The TFE/ethylene copolymer may also preferably be a TFE/ethylene/HFP copolymer including a polymerized unit derived from HFP. The TFE/ethylene/HFP copolymer preferably satisfies a TFE/ethylene/HFP mole ratio of 40 to 65/30 to 60/0.5 to 20, more preferably 40 to 65/30 to 60/0.5 to 10.

Here, the "melt-moldable" fluororesin preferably has a melt flow rate (MFR) of 1 to 100 g/10 min. The MFR of the fluororesin (A) is more preferably 5 to 70 g/10 min, still more preferably 10 to 60 g/10 min. In order to suppress the occurrence of sparks and increase the foaming ratio, the MFR is even more preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a temperature of 372°C and a load of 5 kg.

The fluororesin (A) can be synthesized by polymerizing monomer components through a usual polymerization method, such as emulsion polymerization, suspension polymerization, solution polymerization, bulk polymerization, or gas phase polymerization. In the polymerization reaction, a chain transfer agent such as methanol may be used in some cases. The fluororesin (A) may be produced by polymerization and isolation without a metal-ion-containing reagent.

The fluororesin (A) is not limited, but it may have an end group such as $-CF_3$ or $-CF_2H$ on at least one of the polymer main chain or a side chain. The fluororesin (A) preferably has a $-CF_3$ end group. The fluororesin having these end groups is obtainable by fluorination.

Non-fluorinated fluororesins may have a thermally and electrically unstable end group (hereinafter, such an end group is also referred to as an "unstable end group") such as -COOH, $-CH_2OH$, -COF, and $-CONH_2$. These unstable end groups can be reduced by the fluorination. The fluororesin (A) preferably includes a small number of unstable end groups or no such groups. More preferably, the total number of the above-exemplified four species of unstable end groups and $-CF_2H$ end groups is 50 or less per $1 \times 10^6$ carbon atoms. More than 50 unstable end groups may cause molding defects. The number of unstable end groups is more preferably 20 or less, and still more preferably 10 or less.

The number of unstable end groups herein is a value determined by infrared absorption spectrometry. The fluororesin (A) may have neither unstable end groups nor $-CF_2H$ end groups, and all the end groups therein may be $-CF_3$ end groups.

The fluorination can be achieved by bringing a non-fluorinated fluororesin into contact with a fluorine-containing compound.

The fluorine-containing compound may be any such compound, and examples thereof include fluorine radical sources that generate fluorine radicals under the fluorination conditions. Examples of the fluorine radical source include $F_2$ gas, $CoF_3$, $AgF_2$, $UF_6$, $OF_2$, $N_2F_2$, $CF_3OF$, and halogen fluorides (e.g., $IF_5$, $ClF_3$). One of them may be used alone or two or more of them may be used in combination.

The concentration of the fluorine radical source such as $F_2$ gas may be 100%. In order to exhibit excellent handleability, the fluorine radical source is preferably diluted with an inert gas to 5 to 50% by mass, preferably 15 to 30% by mass. Examples of the inert gas include nitrogen gas, helium gas, and argon gas. In order to save the cost, nitrogen gas is preferred.

The fluorination can be performed under any conditions. A molten fluororesin may be brought into contact with a fluorine-containing compound. Still, the fluorination is usually performed at a temperature of not higher than the melting point of the fluororesin, preferably 20°C to 220°C, more preferably 100°C to 200°C. The fluorination is usually performed for 1 to 30 hours, preferably 5 to 20 hours.

The fluorination is preferably achieved by bringing a non-fluorinated fluororesin with a fluorine gas ($F_2$ gas).

The fluororesin (A) is not limited. In order to obtain a foamed molding having excellent heat resistance and a wide continuous use temperature range, the fluororesin (A) preferably has a melting point of 200°C or higher, a molding temperature of 250°C or higher, and a pyrolysis temperature of 300°C or higher. Furthermore, the melting point is more preferably 250°C or higher, and preferably 300°C or lower. The molding temperature is more preferably 300°C or higher, and preferably 450°C or lower. The pyrolysis temperature is more preferably 350°C or higher, still more preferably 400°C or higher. The upper limit of each the melting point, molding temperature, and pyrolysis temperature is 600°C or lower.

Herein, the melting point is the temperature measured using a differential scanning calorimeter (DSC). The molding temperature is the generally recommended temperature for molding, at which the resin has fluidity and causes no resin deterioration such as coloration. The pyrolysis temperature is the 1% weight loss temperature when the resin is heated at 10°C/min in the air by the thermogravimetric analysis (TG). It excludes weight loss due to volatilization of contained water or crystal water that occurs at 100°C to 200°C. The resin having "fluidity" means that it has a MFR of 0.0001 or higher at the temperature.

In order to reduce signal loss in communication cables, the fluororesin (A) preferably has a permittivity of 3.0 or lower, more preferably 2.6 or lower, most preferably 2.1 or lower. The lower limit thereof is 1.0 or higher. Similarly, the resin preferably has a dissipation factor of 0.01 or lower, more preferably 0.001 or lower, most preferably 0.0004 or lower. The lower limit thereof is 0.0001 or higher. The permittivity and the dissipation factor are measured by a cavity resonator method at a frequency of 6 GHz.

The foam molding resin composition preferably contains 80% by mass or more of the fluororesin (A), more preferably 90% by mass or more, still more preferably 95% by mass or more, particularly preferably 97% by mass or more. The upper limit of the amount is preferably 99.99% by mass or less, more preferably 99.85% by mass or less, still more preferably less than 99.85% by mass.

The foam molding resin composition of the disclosure preferably includes a different resin other than the fluororesin (A). The different resin is not limited, but it may be a non-melt-moldable fluororesin or a resin other than fluororesin. In order to achieve a high biaxial elongational viscosity and an improved foamed state, the non-melt-moldable fluororesin is preferred.

Hereinafter, a non-melt-moldable fluororesin used in the disclosure is referred to as a fluororesin (B).

Furthermore, "non-melt-moldable" herein means that the MFR is lower than 1 g/10 min. The MFR is preferably 0.1 g/10 min or lower.

The fluororesin (B) may be any non-melt-moldable one such as polytetrafluoroethylene (PTFE). The FEP, PFA, ETFE, PCTFE, and PVDF as examples of the fluororesin (A) are also usable. One of them may be used alone or two or more of them may be used in combination. Preferred is the PTFE among them.

The FEP and the like as examples of the fluororesin (A) are considered to be fluororesins (B) when the MFR is less than 1 g/10 min, whereas they are considered to be fluororesins (A) when the MFR is 1 g/10 min or higher. The FEP corresponding to the fluororesin (A) and the FEP corresponding to the fluororesin (B) can be used together.

In the disclosure, the PTFE may be a homopolymer of tetrafluoroethylene (TFE) or may be modified polytetrafluoroethylene (modified PTFE) obtained from TEF and a trace comonomer.

The TFE homopolymer can be obtained by polymerization of only tetrafluoroethylene (TFE) as a monomer. The trace comonomer in the modified PTFE may be any fluorine-containing compound that is copolymerizable with the TFE. Examples thereof include perfluoroolefins such as hexafluoropropylene (HFP); perfluorovinyl ethers (PFVEs) such as various PAVEs described above; fluorodioxole; trifluoroethylene; and vinylidene fluoride.

In the modified PTFE, usually, the percentage of the trace monomer units derived from the trace monomer is 0.001 to 1.0% by mass of all the monomer units.

Herein, "the percentage (% by mass) of the trace monomer units of all the monomer units" means the mass fraction (mass%) of the trace monomer from which the trace monomer units are derived in the total amount of the monomers from which "all the monomer units" are derived, i.e., the monomers constituting the fluorine-containing polymer.

From the perspectives of heat resistance and electrical properties, the PTFE preferably has a standard specific gravity (SSG) of 2.15 to 2.30, more preferably 2.25 or lower, still more preferably 2.22 or lower.

Though a high molecular weight PTFE having a SSG of lower than 2.15 still exhibits the effects of the disclosure, it is hard to produce and thus impractical.

The SSG is determined by the immersion method in conformity with ASTM D4895-89.

The PTFE having a low SSG can exhibit the effect of increasing biaxial elongational viscosity with a small amount thereof. The PTFE having a high SSG needs a larger amount to exhibit such an effect.

The PTFE can be synthesized by known methods such as emulsion polymerization and suspension polymerization. The polymerization method is preferably emulsion polymerization.

In the case where the foam molding resin composition of the disclosure contains agglomerates of the PTFE, frequent spark-outs occur while molding an electric wire covering, which may cause a higher defect rate. Thus, the PTFE preferably has an average primary particle size of 50 to 800 nm, more preferably 50 to 500 nm.

The average primary particle size of the PTFE is determined as follows: measuring the Feret diameters of the PTFE in a transmission electron microscope image to determine the number-based length average primary particle size; diluting polymer latex with water to a solid content of 0.22% by mass; measuring the transmittance of 500-nm light relative to the unit length of the diluted latex; based on these values, obtaining a calibration curve, by which the average primary particle size of the PTFE is determined.

Examples of the different resin other than the fluororesin (A) include, other than fluororesin (B), general-purpose resins such as polyethylene resin, polypropylene resin, vinyl chloride resin, and polystyrene resin; and engineering plastics such as nylon, polycarbonate, polyether ether ketone resin, polyphenylene sulfide resin, polyarylether ketone (PAEK), polyether ketone ketone (PEKK), polyether ketone (PEK), polyether ether ketone ketone (PEEKK), polyethersulfone (PES), liquid crystal polymer (LCP), polysulfone (PSF), amorphous polyarylate (PAR), polyethernitrile (PEN), thermoplastic polyimide (TPI), polyimide (PI), polyetherimide (PEI), and polyamide-imide (PAI). One of them may be used alone or two or more of them may be used in combination.

The foam molding resin composition preferably contains more than 0.15% by mass, more preferably 0.16% by mass or more, still more preferably 0.17% by mass or more, further preferably 0.2% by mass or more, even more preferably 0.25% by mass or more, even more preferably 0.4% by mass or more of the different resin other than the fluororesin (A). The upper limit of the amount is preferably 3% by mass or less, more preferably 2% by mass or less, still more preferably 1% by mass or less. Too small an amount of the different resin may exhibit an insufficient effect of increasing the biaxial elongational viscosity. Too large an amount of the different resin may cause poor dispersion, which may easily cause covering breakage while molding an electric wire covering.

The fluororesin (A) and the different resin are preferably mixed by co-coagulation. Such a mixture can be achieved, for example, by mixing an aqueous dispersion including the fluororesin (A) with an aqueous dispersion including the different resin, followed by coagulation.

Here, "co-coagulation" refers to mixing aqueous polymer dispersions with one another followed by coagulation.

The co-coagulation can be appropriately performed by any conventional method.

The polymer solid content in each aqueous polymer dispersion is not limited but it can be appropriately adjusted according to the kind and the amount of each polymer used. The solid content in each aqueous polymer dispersion is preferably 1 to 70% by mass, more preferably 3 to 50% by mass.

The aqueous medium constituting each aqueous polymer dispersion may be any medium containing water. It may or may not contain a water-soluble organic solvent such as water-soluble alcohol.

In order to have good dispersibility, each aqueous polymer dispersion preferably contains a conventionally known surfactant without impairing the moldability of the resulting resin.

The aqueous polymer dispersions can be mixed using a high-speed stirrer.

The mixed solution obtainable by mixing two kinds of aqueous polymer dispersion is preferably adjusted to have a solid content of all polymers of 5 to 40% by mass.

The coagulation method in co-coagulation may be any method. Examples include salting out using nitric acid and hydrochloric acid as coagulant. Examples also include a mechanical coagulating method such as stirring without using coagulants.

After the co-coagulation, the resin preferably undergoes separation by suction filtration and repeated water-washing and suction filtration until it reaches a neutral pH.

Then, the collected resin (wet powder) is preferably dried. Such drying is preferably performed at 100°C to 240°C for 2 to 48 hours. The drying can be performed by dry-accelerating methods such as decompressing or flowing dried gas.

The foam molding resin composition of the disclosure may further contain a foam nucleating agent. Such a composition achieves an improved foamed state.

Examples of the foam nucleating agent include boron nitride, sodium 2,2'-methylenebis(4,6-di-t-butylphenyl) phosphate, fluorooctanesulfonic acid barium salts, bisphenol phosphoric diester barium salts, N,N'-dicyclohexyl-2,6-naphthalene dicarboxamide, sodium benzenephosphonate, 2,6-naphthalene dicarboxylic acid, 1,3:2,4-bis-O-(4-methylbenzylidene)-D-sorbitol, N,N-dioctadecylisophthalamide, sodium benzoate, sodium bis(4-nitrophenyl) phosphate, triaminobenzene derivatives, 1,3,5-tris (2,2-dimethylpropionylamino)-benzene, pigment red 254, talc, binaphthyl phosphoric acid sodium salts, t-butyl-binaphthyl phosphoric acid barium salts, rosin metal salts, condensed phosphate ester. Other examples include sulfonic acid, sulfonic acid salts, phosphonic acid, phosphonic acid salts, zeolite, azodicarbonamide (ADCA), N,N'-dinitropentamethylenetetramine (DPT), 4,4'-oxybis benzenesulfonyl hydrazide (OBSH). Among these, preferred are boron nitride and sodium 2,2'-methylenebis(4,6-di-t-butylphenyl) phosphate. One of them may be used alone or two or more of them may be used in combination.

The boron nitride more preferably has an average particle size of 9.0 $\mu$m or greater, still more preferably 10.0 $\mu$m or greater, further preferably 10.5 $\mu$m or greater, particularly preferably 11.0 $\mu$m or greater, more particularly preferably 12.0 $\mu$m or greater, most preferably 13.0 $\mu$m or greater.

Boron nitride having too large an average particle size may lead to a larger average cell size and the occurrence of many sparks. The boron nitride preferably has an average particle size of 25 $\mu$m or smaller, more preferably 20 $\mu$m or smaller.

The boron nitride having an average particle size within this range can provide covering materials having fine and uniform cells.

The average particle size of the boron nitride is a value determined using a laser diffraction scattering particle size distribution analyzer. In the case of a wet process, any appropriately selected medium such as methanol can be used.

The boron nitride preferably has a particle size distribution (D84 - D16)/D50 of 1.2 or lower.

When a cumulative curve is drawn with the whole volume of the group of the boron nitride powder taken as 100%, the above D84, D50, and D16 represent the particle size ($\mu$m) at the point where the curve reaches 84%, the particle size ($\mu$m) at the point where the curve reaches 50%, and the particle size ($\mu$m) at the point where the curve reaches 16%, respectively. The accumulation of the particle size distribution starts from the smallest particle size. The whole volume of the group of the powder can be determined on a sample prepared by dispersing the boron nitride powder in a medium such as methanol using a laser diffraction scattering particle size distribution analyzer (e.g., Microtrac MT3300, NIKKISO CO., LTD.).

The boron nitride having a particle size distribution within the above range enables production of covering materials that have fine, uniform cells and more suppression of the occurrence of sparks.

The particle size distribution is more preferably 1.1 or lower, and still more preferably 1.0 or lower. The lower limit of the particle size distribution is not particularly limited, and it may be 0.1, for example.

The cumulative curve of the particle size distribution (volume-based particle size distribution) can be obtained using a laser diffraction scattering particle size distribution analyzer (e.g., Microtrac MT3300, NIKKISO CO., LTD.). In the case of a wet process, any appropriate medium such as methanol can be used.

The boron nitride is preferably in a pulverized form. Such pulverized boron nitride can more suppress the occurrence of sparks.

The pulverization can be performed by a method and under conditions in which the boron nitride is allowed to have an average particle size and a particle size distribution within the above respective ranges. For example, the type and the conditions of a pulverizer are appropriately adjusted. Examples of the pulverizer include a jet mill, a hammer mill, a ball mill, and a pin mill.

The average particle size or particle size distribution of the boron nitride can be adjusted to fall within the above respective ranges by classification.

The sodium 2,2'-methylenebis(4,6-di-t-butylphenyl) phosphate more preferably has an average particle size of 20.0 $\mu$m or smaller, still more preferably 10.0 $\mu$m or smaller, further preferably 5.0 $\mu$m or smaller, most preferably 2.0 $\mu$m or smaller.

The sodium 2,2'-methylenebis(4,6-di-t-butylphenyl) phosphate having too small an average particle size may have lower effects as a foam nucleating agent. The sodium 2,2'-methylenebis(4,6-di-t-butylphenyl) phosphate preferably has an average particle size of 0.001 $\mu$m or greater, more preferably 0.01 $\mu$m or greater.

The sodium 2,2'-methylenebis(4,6-di-t-butylphenyl) phosphate having an average particle size within the above range can produce covering materials having fine and uniform foams.

The average particle size of sodium 2,2'-methylenebis(4,6-di-t-butylphenyl) phosphate can be measured by the same method as used for the average particle size of the boron nitride.

The foam molding resin composition of the disclosure preferably contains, although not limited to, 0.1 to 10% by mass, more preferably 0.1 to 3% by mass, still more preferably 0.1 to 1.5% by mass, further preferably 0.1 to 1.0% by mass of the foam nucleating agent. With too small an amount of the foam nucleating agent, the effects of adding the nucleating agent may be insufficient. Too large an amount thereof may increase production costs.

The foam molding resin composition of the disclosure may further contain a polyatomic anion-containing inorganic salt in an amount that does not impair the effects of the disclosure.

Examples of the polyatomic anion-containing inorganic salt include those described in US 4,764,538 A.

The foam molding resin composition of the disclosure may contain a conventionally known filler in an amount that does not impair the effects of the disclosure.

Examples of the filler include graphite, carbon fiber, coke, silica, zinc oxide, magnesium oxide, magnesium sulfate, tin oxide, antimony oxide, calcium carbonate, magnesium carbonate, magnesium hydroxide, glass, talc, mica, mica, aluminum nitride, calcium phosphate, sericite, diatomite, silicon nitride, fine silica, fumed silica, alumina, zirconia, quartz powder, kaolin, bentonite, and titanium oxide. One of them may be used alone or two or more of them may be used in combination. The filler may be in any form. For example, the filler may be in the form of fibers, needles, columns, whiskers, flat plates, layers, scales, balloons, porous material, chopped fibers, powder, particles, beads, or the like. The filler is different from the boron nitride mentioned above for the foam nucleating agent.

The foam molding resin composition of the disclosure may further contain any other components such as additives. Examples of such components include fillers such as glass fiber, glass powder, asbestos fiber, cellulose fiber, and carbon fiber, reinforcing agents, stabilizers, lubricants, pigments, flame retarders, and other additives.

Too large an amount of the low molecular weight fluorocompound may plasticize resin in the molten state when molded, resulting in the occurrence of many sparks. Preferably, the foam molding resin composition of the disclosure substantially contains no low molecular weight fluorocompound.

Herein, "substantially contains no low molecular weight fluorocompound" means that the amount of the compound is 10 ppm or less in the composition.

The low molecular weight fluorocompound can be any compound. Examples of one include perfluoroalkyl acid or perfluorosulfonic acid. Specifically, examples include $C_8F_{17}COOH$ and salts thereof, $C_7F_{15}COOH$ and salts thereof, $C_6F_{13}COOH$ and salts thereof, $C_8F_{17}SO_3H$ and salts thereof, $C_6F_{13}SO_3H$ and salts thereof, $C_4F_9SO_3H$ and salts thereof, $C_8F_{17}CH_2CH_2\text{-}SO_3H$ and salts thereof, $C_6F_{13}CH_2CH_2\text{-}SO_3H$ and salts thereof, $C_8F_{17}CH_2CH_2OH$, and $C_6F_{13}CH_2CH_2OH$, more specifically $\{F(CF_2)_6CH_2CH_2SO_3\}_2Ba$.

The amount of the low molecular weight fluorocompound can be determined by the following method: crushing pellets of the foam molding resin composition by cryo-milling; dispersing the resulting powder in methanol, followed by extraction under ultrasonic irradiation at 60°C for two hours; and quantifying the extract using a liquid chromatograph-mass spectrometer (LC-MS/MS) to determine the amount of the low molecular weight fluorocompound.

The foam molding resin composition of the disclosure preferably has a melt flow rate (MFR) of 1 to 100 g/10 min. The MFR is more preferably 5 to 70 g/10 min, still more preferably 10 to 60 g/10 min. In order to suppress the occurrence of sparks and increase the foaming ratio, the MFR is further preferably 15 to 50 g/10 min, even more preferably 20 to 45 g/10 min, particularly preferably 30 to 45 g/10 min.

The MFR is a value determined in conformity with ASTM D1238 using a die having a diameter of 2.1 mm and a length of 8 mm at a load of 5 kg and a temperature of 372°C.

The foam molding resin composition of the disclosure can be produced by, for example, a production method including mixing the fluororesin (A) with the optional different resin and/or the like, to provide a mixture.

The mixing method may be any conventionally known method, for example. Preferred is a mixing method in which the biaxial elongational viscosity increases.

The mixing method may be one using a Henschel mixer, a ribbon mixer, a V blender, a ball mill, or the like. A mixing method utilizing melt-kneading may be used. In the combination use of the fluororesin (A) and the different resin, in order to increase the biaxial elongational viscosity, preferred is the co-coagulation described above.

The production method may include kneading the mixture prepared in the above mixing. The kneading provides pellets. The kneading can be performed by a method using a conventionally known melt-kneading device such as a single screw extruder or a twin screw extruder.

The producing method may include fluorinating the fluororesin. The fluorination can be performed by any of the aforementioned methods. For example, the fluorination may be performed by bringing the pellets prepared by the above kneading into contact with the aforementioned fluorine-containing compound.

The foam molding resin composition of the disclosure can suitably be used as a foamable composition. Especially, the composition can be suitably used as a composition for forming covering layers of electric wires.

The foam molding resin composition of the disclosure can be foam-molded by any conventionally known method. For example, the foam molding resin composition of the disclosure is charged into a screw extruder designed for foaming operations, and then a continuous gas extrusion method is performed.

Examples of the gas used in the gas extrusion method include gases of chlorodifluoromethane, nitrogen, and carbon dioxide, and any mixtures of these gases. The gas in the form of a pressurized gas may be introduced into the molten resin in the extruder, or the gas may be generated by mingling a chemical foaming agent into the molten resin. The introduced gas dissolves in the molten resin in the extruder.

When the molten material is extruded through an extrusion die, the gas dissolved in the resin emerges from the molten material in response to this sudden decrease of pressure. The material extruded through the extruder is then, for example, put into water to be cooled down and solidified.

The foamed molding is obtained by foam-molding the foam molding resin composition of the disclosure. It has a low permittivity, a stable capacitance, and a light weight, and it can provide a covering material to be mentioned later having stable dimensions such as the wire diameter and the thickness.

The total volume of the cells in the foamed molding can appropriately be adjusted so as to fit the use thereof by, for example, adjusting the amount of gas introduced into the extruder or selecting the type of gas to be dissolved.

The foamed state of the foamed molding can be determined, for example, by the value of "(cell density) $\times$ (MFR of composition)$^2$" ((cells/mm$^2$) $\times$ (g/10 min)$^2$). The higher the value of "(cell density) $\times$ (MFR of composition)$^2$", the more the foamed molding contains uniformly dispersed fine cells, indicating a good foamed state. Such a value is preferably 5550 or more, more preferably 5650 or more, still more preferably 5750 or more, particularly preferably 5850 or more. The upper limit thereof is, although not limited to, preferably 8000 or less, more preferably 7800 or less, still more preferably 7600 or less, further preferably 7400 or less, even more preferably 7200 or less, particularly preferably 7000 or less.

The foamed molding can be produced as a molded material extruded through the extruder so as to have a shape that fits the use thereof. The molding method can be any heat melt molding, and examples thereof include extrusion foam molding, injection foam molding, and mold foam molding.

The foamed molding can have any shape. For example, it can be formed into any of various shapes, including the covering materials such as foamed electric wires; filament-like shapes such as the shapes of wire rods; sheet-like shapes; film-like shapes; rod-like shapes; and pipe-like shapes. Examples of the use of the foamed molding include electrical insulating materials; heat insulating materials; sound insulating materials; light-weight structural materials such as floating materials; and cushioning materials such as cushions. The foamed molding can particularly suitably be used as a covering material for foamed electric wires.

Preferably, the resulting foamed molding contains a melt-solidified matter of the foam molding resin composition of the disclosure and cells, and the cells are uniformly distributed in the melt-solidified matter. The cells may have any average cell size, and it is preferably 60 $\mu$m or smaller, for example. The average cell size is also preferably 0.1 $\mu$m or greater.

The foamed molding may have any foaming ratio, and the ratio is preferably 20% or higher. The upper limit of the foaming ratio may be, although not limited to, 80%.

An interlayer insulator of the disclosure is foamed using the foam molding resin composition. Since the interlayer insulator of the disclosure has a foamed state advantageous in reducing permittivity, it can suitably be used as insulating layers for electric wires, semiconductor package substrates, transformers, circuit boards, motors, reactors, transistors, printed circuit boards, semiconductor devices, and electric parts, especially as insulating layers (covering layers) for electric wires.

A laminate of the disclosure includes a conductor and a foam layer on the conductor, the foam layer being formed using the foam molding resin composition. The laminate of the disclosure comprises the foam layer having a foamed state advantageous in reducing permittivity. Therefore, it can be used as, for example, printed wiring boards, power module substrate, coils used in power units such as motors, secondary batteries such as lithium ion batteries, primary batteries such as lithium batteries, radical batteries, solar cells, fuel cells, lithium ion capacitors, hybrid capacitors, electric double-layer capacitors, capacitors (aluminum electrolytic capacitors, tantalum electrolytic capacitor, etc.), electrochromic elements, electrochemical switching elements, and separators for electrodes.

The laminate of the disclosure can be used as antenna components, printed boards, aircraft components, automobile components, and heat radiating components. Specific examples thereof include wire covering material (aircraft wires, rectangular wires, flexible flat cables (FFC), etc.), enameled wire covering material for electric vehicle motors, covering material for power generation devices, electrical insulating tapes, insulating tapes for oil-drilling, printed board materials, tape base films for semiconductor manufacturing process (dicing tapes, pick-up tapes, etc.), release films for molding semiconductors, liquid crystal antennas, transmission lines, base films for chip on film (COF), electrostatic chucks for semiconductor manufacturing process, electrostatic chucks for display manufacturing process, mounting heat radiating substrates for power devices, heat radiating members for wireless communication devices, transistors, thyristors, rectifiers, transformers, power MOS FETs, CPUs, heat radiating fins, metallic heatsinks, electronic device materials, sealing materials for plasma processing apparatus, heat radiating components inside the processing units of sputtering devices or various dry etching devices, and electromagnetic wave shields.

The laminate of the disclosure can be used as electronic board materials such as flexible printed wiring boards and rigid printed wiring boards, protective films, and heat radiating substrates (especially ones for automobiles).

In particular, the laminate of the disclosure can be used as electric wires.

A foam electric wire of the disclosure includes a conductor and a foam insulating layer (covering layer) on the conductor, the foam insulating layer being formed using the foam molding resin composition. The foam electric wire of the disclosure includes the foam insulating layer having a foamed state advantageous in reducing permittivity, and thus, it can reduce signal attenuation more than conventional wires.

The material of the conductor (core) can be a conductive metal material such as copper and aluminum or carbon, for example. It may consist of a single material or may be nickel plated or silver plated on the surface.

The conductor is preferably 0.02 to 3 mm in diameter. The diameter of the conductor is more preferably 0.04 mm or greater, still more preferably 0.05 mm or greater, particularly preferably 0.1 mm or greater. The diameter of the conductor is more preferably 2 mm or smaller. The conductor may be a single wire or a stranded wire of a plurality of conductors.

The conductor may have any shape and may be flat or rectangular.

Specific examples of the conductor (core) include those satisfying AWG-46 (40-$\mu$m-diameter solid copper wires), those satisfying AWG-42 (64-$\mu$m-diameter solid copper wires), those satisfying AWG-36 (127-$\mu$m-diameter solid copper wires, stranded wires of seven 51-$\mu$m-diameter copper wires with a total diameter of 153 $\mu$m), those satisfying AWG-30 (254-$\mu$m-diameter solid copper wires, stranded wires of seven 102-$\mu$m-diameter copper wires with a total diameter of 306 $\mu$m), those satisfying AWG-27 (361-$\mu$m-diameter solid copper wires), those satisfying AWG-26 (404-um-diameter solid copper wires), those satisfying AWG-24 (510-um-diameter solid copper wires), and those satisfying AWG-22 (635-um-diameter solid copper wires); here, AWG represents the American wire gauge.

The foam insulating layer (covering layer) is preferably 0.01 to 3.0 mm in thickness and is also preferably 2.0 mm or smaller in thickness.

The foam electric wire of the disclosure can be used for cables for connecting computers and peripherals, cables for communicating high capacity video and audio at high speed, and cables for connecting servers in data centers, such as LAN cables, USB cables, Lightning cables, Thunderbolt cables, CATV cables, HDMI® cables, QSFP cables, aerospace wires, underground power cables, submarine power cables, high-voltage cables, superconducting cables, wrapping wires, wires for automobiles, wire harnesses/electrical components, wires for robots/FA, wires for OA equipment, wires for information equipment (optical fiber cables, audio cables, etc.), internal wiring for communication base stations, large current internal wiring (inverters, power conditioners, storage battery systems, etc.), internal wiring for electronic equipment, small electronic equipment/mobile wiring, wiring for moving parts, internal wiring for electrical equipment, internal wiring for measuring equipment, power cables (for construction, wind/solar power generation, etc.), cables for control/instrumentation wiring, and cables for motors.

The foam electric wire of the disclosure may have a double-layered (skin-foam) structure comprising a core, a covering material, and a non-foam layer disposed therebetween, a double-layered (foam-skin) structure comprising a non-foam layer that covers the peripheral layer of the wire, or a triple-layered (skin-foam-skin) structure comprising a non-foam layer that covers the peripheral layer of the skin-foam structure.

The non-foam layer may be any resin layer formed of a resin such as any of TFE/HFP copolymers, TFE/PAVE copolymers, TFE/ethylene copolymers, vinylidene fluoride polymers, polyolefin resins (e.g., polyethylene (PE)), and polyvinyl chloride (PVC).

It should be appreciated that a variety of modifications and changes in the structure and other details may be made to the aforementioned embodiments without departing from the spirit and scope of the claims.

EXAMPLES

The disclosure is described in more detail below with reference to examples, but is not limited to these examples.

The properties herein were determined by the following methods.

(Measurement of number of unstable end groups)

A pellet was rolled with a hydraulic press to prepare a film of approximately 0.3 mm thickness. The film was analyzed using a FT-IR Spectrometer 1760X (available from PerkinElmer).

A difference spectrum was obtained between the resulting spectrum and a base spectrum (spectrum where a sample was sufficiently fluorinated until no substantial difference could be observed anymore). The absorbance of each absorption peak was determined. The number of unstable end groups per $1 \times 10^6$ carbon atoms was calculated based on the following formula.

Number of unstable end groups per $1 \times 10^6$ carbon atoms = $(I \times K)/t$

(I: Absorbance, K: Correction coefficient, t: Thickness of film (mm))

The correction coefficient (K) of each unstable end group is described below.

- COF (1884 $cm^{-1}$) 405
- COOH (1813 $cm^{-1}$, 1775 $cm^{-1}$) 455
- $COOCH_3$ (1795 $cm^{-1}$) 355
- $CONH_2$ (3438 $cm^{-1}$) 480
- $CH_2OH$ (3648 $cm^{-1}$) 2325

(Measurement of number of -$CF_2H$ end groups)

Measurement by $^{19}F$-NMR was performed using a nuclear magnetic resonance device AC300 (available from Bruker-Biospin) with the measurement temperature set at (melting point of fluororesin (A) + 20°C). The number was determined from integral value of the peak due to the presence of -CF$_2$H end groups and integral values of other peaks.

(Low molecular weight fluorocompound content)

The content was measured by aforementioned method.

(SSG)

The SSG was determined by the immersion method in conformity with ASTM D4895-89.

(Melting point)

The melting point was a temperature corresponding to the peak in the measurement using RDC220 (Seiko Instruments Inc.) at a temperature-increasing rate of 10°C/min.

(MFR)

The MFR was a value determined in conformity with ASTM D1238 using a KAYENESS Series 4000 melt indexer (YASUDA SEIKI SEISAKUSHO, LTD.) and a die having a diameter of 2.1 mm and a length of 8 mm at a temperature of 372°C and a load of 5 kg.

(Biaxial elongational viscosity)

The biaxial elongational viscosity was measured by aforementioned method. Table 1 shows the maximum values. An electric furnace was preheated to 350°C. The resin was melted for three minutes. The measurement temperature was set at 330°C.
The examples and the comparative examples were performed by the following methods.

(FEP)

As a raw material, a dispersion (aqueous dispersion) was prepared by emulsion polymerization using ammonium persulfate as a polymerization initiator. Separated fluororesin (FEP) was composed of a tetrafluoroethylene (TFE) unit, a hexafluoropropylene (HFP) unit, and a perfluoro(propyl vinyl ether) [CF$_2$=CFOC$_3$F$_7$(PPVE)] unit. It had a melting point of 260°C.

(PTFE)

As a raw material, an aqueous PTFE dispersion was prepared by the method described in Example 1 in WO 2019/168183. Separated fluororesin (PTFE) was composed of a TFE homopolymer. It had an SSG of 2.173, a melting point of 344°C, and an MFR of 0 g/10 min.

Comparative Example 1, Examples 1 to 4

The aqueous dispersion (resin content: 20% by mass) that was the raw material of FEP was diluted three times, and mixed with the aqueous dispersion (resin content: 20% by mass) that was the raw material of PTFE in such an amount that it satisfied a target concentration. The resulting dispersion was stirred with a high-speed stirrer (T. K. ROBOMIX available from Tokushu Kika Kogyo Co., Ltd., stirring unit: homogenizing disperser, 3000 rpm), followed by dropwise addition of a small amount of nitric acid to foam a slurry. Next, the slurry was subjected to suction filtration for separation of a resin and to repetitive water-washes and suction filtration until it reached a neutral pH. The collected resin was dried at 150°C for six hours.
The dried resin was fluorinated at 200°C for six hours with fluorine gas (F$_2$) that had been diluted to 20% with nitrogen. The absence of the unstable end groups and -CF$_2$H end groups confirmed that the resulting resin had - CF$_3$ end groups.
In addition, no low molecular weight fluorocompound was detected in the resulting resin.
In the batch foaming evaluation described hereafter, the value of "(cell density) × (MFR of composition)$^2$" was 6361 in Example 1, 6958 in Example 2, and 5903 in Example 4, which meant good foams had been obtained with uniformly dispersed fine cells. The value of "(cell density) × (MFR of composition)$^2$" was 5478 in Comparative Example 1, which meant a poor foam had been obtained with high degree of coalescence and coarse cells.

Comparative Examples 2 to 7

Materials (FEP pellets and PTFE powder) were put in a Labo Plastomill (3S150 R60, available from Toyo Seiki Seisaku-sho) preheated to 350°C, followed by kneading at 350°C and 60 rpm for 10 minutes.
The kneaded resin was fluorinated, at 200°C for six hours, by contact with a fluorine gas ($F_2$ gas) diluted to 20% with nitrogen gas. The absence of the unstable end groups and $-CF_2H$ end groups confirmed that the resulting resin had $-CF_3$ end groups.
In addition, no low molecular weight fluorocompound was detected in the resulting resin.
In the batch foaming evaluation described hereafter, the value of "(cell density) $\times$ (MFR of composition)$^2$" was 5283 in Comparative Example 2, 5150 in Comparative Example 3, 5210 in Comparative Example 4, and 5512 in Comparative Example 5, which meant a poor foam had been obtained with high degree of coalescence and coarse cells.
The resins (compositions) of the examples and comparative examples were evaluated as described hereafter.

(Batch foaming evaluation)

Each resin of examples and comparative examples and a foam nucleating agent (boron nitride) were kneaded with a Labo Plastomill at 300°C and 60 rpm for 10 minutes. The foam nucleating agent was contained in an amount of 1% by mass in the kneaded mixture.
The kneaded mixture was molded into a strand shape at 300°C with a melt indexer and then cut into pellets.
The pellets were put in a capsule made of aluminum foil. The capsule was charged into a pressure vessel preheated to 280°C.
The pressure vessel was pressurized with gas (nitrogen) and kept stationary for 60 minutes while the temperature and the pressure were maintained at 280°C and 3 MPa followed by a rapid (within a second) decompression. The capsule was taken out.
After confirming that the resin had solidified, it was taken out from the capsule.
The resin was cut with a razor. The section thereof was observed using a SEM and the number of cells per unit area was calculated using an image processor (Mac-View, available from MOUNTECH Co., Ltd.) to determine cell density (cells/mm$^2$).
Higher biaxial elongational viscosity can reduce cell coalescence and increase uniformly dispersed fine cells, resulting in improved cell density. The foamed state was evaluated based on the value of "(cell density) $\times$ (MFR of composition)$^2$" ((cells/mm$^2$) $\times$ (g/10 min)$^2$). The higher the value, the more the foamed molding contains uniformly dispersed fine cells, indicating a good foamed state.
Generally, the foamability varies according to the MFR. Fine foaming is likely to occur at lower MFR. Multiplying cell density by MFR$^2$ can eliminate the influence of the MFR.

(Dispersibility evaluation)

A flake of the composition in each of examples and comparative examples was placed on a hot stage and observed using a polarization microscope (BX51, available from Olympus) under crossed nicols, to evaluate dispersibility of PTFE.
The temperature of the hot stage was increased to 300°C, which is not lower than the melting point of FEP and lower than the melting point of PTFE, then further increased to 360°C, which is not lower than the melting point of PTFE, then decreased back to 300°C, which is not higher than the melting point of PTFE. Then, the observation was performed.
In the observation under crossed nicols, interference colors appear due to crystal components, allowing observation of crystals. Therefore, the interference colors observed were identified as PTFE crystals. At 300°C FEP melts, whereas PTFE does not. The dispersion state can be determined by observing PTFE crystals. Furthermore, PTFE disappears when the temperature is increased to 360°C, which is not lower than the melting point of PTFE. The PTFE crystals appears again when the temperature is decreased to 300°C. A foaming nucleating agent such as boron nitride does not melt or disappear even at 360°C, allowing it to be distinguished from PTFE.
In the observation of the PTFE crystals at 300°C, a maximum diameter of 10 $\mu$m or less was marked as "o", and that of more than 10 $\mu$m as "$\times$".
When the dispersibility of PTFE is good ($\circ$), the composition had high biaxial elongational viscosity, suppressing the coalescence of cells during foaming and having a greater number of uniformly dispersed fine cells, and thus, leading to a good foamed state.

[Table 1]

| Item | Example 1 | Example 2 | Example 3 | Example 4 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| MFR of FEP g/10 min | 36.5 | 36.5 | 36.5 | 36.5 | 36.5 | 36.5 | 36.5 | 36.5 | 36.5 | 36.5 | 36.5 |
| PTFE concentration % by mass | 0.5 | 0.2 | 0.3 | 1 | 0.1 | 0.1 | 0.5 | 1 | 0.2 | 0.3 | 3 |
| Mixing method | co-coagulation | co-coagulation | co-coagulation | co-coagulation | co-coagulation | melt-kneading | melt-kneading | melt-kneading | melt-kneading | melt-kneading | melt-kneading |
| Biaxial elongational viscosity Pa·s | $4.8\times10^5$ | $2.5\times10^5$ | $1.8\times10^5$ | $2.2\times10^5$ | $5.5\times10^4$ | - | $5.4\times10^4$ | $5.4\times10^4$ | - | $7.5\times10^4$ | $1.7\times10^4$ |
| MFR of composition g/10 min | 27.7 | 30.4 | - | 21.7 | 34.2 | 34.0 | 27.5 | 23.2 | 32.0 | - | - |
| Batch foaming evaluation (cells/mm$^2$)·(g/10 min)$^2$ | 6361 | 6958 | - | 5903 | 5478 | 5283 | 5150 | 5210 | 5512 | - | - |
| Dispersibility evaluation | - | ○ | - | ○ | - | - | - | - | - | × | × |

Although the biaxial elongational viscosity was not measured for Comparative Examples 2 and 5, it is inferred to be similar to that of Comparative Example 3 based on the PTFE concentration, mixing method, and batch foaming evaluation results.

Furthermore, PTFE tends to aggregate and have lower dispersibility as the addition amount (concentration) increases. Since PTFE added by co-coagulation has good dispersibility even at 1% by mass (Example 4), it is inferred that the dispersibility evaluation of Examples 1 and 3, which had lower concentration, is good (∘). It is also inferred that the batch foaming evaluation of Example 3 is as good as those of Examples 1 and 2 based on the PTFE concentration, mixing method, and biaxial elongational viscosity.

Here, in the batch foaming evaluation, boron nitride was used as the foaming nucleating agent, but similar results are expected even when using sodium 2,2'-methylenebis(4,6-di-t-butylphenyl) phosphate.

REFERENCE SIGNS LIST

    1: electric furnace
    2: resin mounting portion
    2a: opening
    3: regulator
    4: ball valve
    5: pressure sensor
    10: device

**Claims**

1. A foam molding resin composition comprising a melt-moldable fluororesin,
   the foam molding resin composition having a maximum biaxial elongational viscosity of $1 \times 10^5$ to $1 \times 10^7$ Pa·s.

2. The foam molding resin composition according to claim 1,
   wherein the fluororesin has a melt flow rate of 1 to 100 g/10 min.

3. The foam molding resin composition according to claim 1 or 2, further comprising a different resin other than the fluororesin.

4. The foam molding resin composition according to claim 3,
   wherein the different resin has a melt flow rate of less than 1 g/10 min.

5. The foam molding resin composition according to claim 3 or 4,
   wherein the different resin is polytetrafluoroethylene.

6. The foam molding resin composition according to any one of claims 3 to 5,
   wherein the foam molding resin composition contains more than 0.15% by mass and 3% by mass or less of the different resin.

7. The foam molding resin composition according to claim 6,
   wherein the foam molding resin composition contains 0.2 to 1% by mass of the different resin.

8. The foam molding resin composition according to any one of claims 1 to 7,
   wherein the fluororesin has a melting point of 250°C or higher.

9. The foam molding resin composition according to any one of claims 1 to 8,
   wherein the fluororesin is a tetrafluoroethylene/hexafluoropropylene copolymer.

10. The foam molding resin composition according to any one of claims 1 to 9,
    wherein the fluororesin has a $-CF_3$ end group.

11. The foam molding resin composition according to any one of claims 1 to 10,

the foam molding resin composition containing 80 to 99.99% by mass of the fluororesin.

12. The foam molding resin composition according to claim 11,
the foam molding resin composition containing 97% by mass or more and less than 99.85% by mass of the fluororesin.

13. The foam molding resin composition according to any one of claims 1 to 12, further comprising a foam nucleating agent.

14. The foam molding resin composition according to claim 13,
wherein the foam nucleating agent is boron nitride and/or sodium 2,2'-methylenebis(4,6-di-t-butylphenyl) phosphate.

15. The foam molding resin composition according to claim 13 or 14,
wherein the foam molding resin composition contains 0.1 to 10% by mass of the foam nucleating agent.

16. The foam molding resin composition according to claim 15,
wherein the foam molding resin composition contains 0.1 to 3% by mass of the foam nucleating agent.

17. The foam molding resin composition according to any one of claims 1 to 16, containing substantially no low molecular weight fluorocompound.

18. An interlayer insulator formed using the foam molding resin composition according to any one of claims 1 to 17.

19. A laminate comprising:

    a conductor; and
    a foam layer on the conductor,
    the foam layer being formed using the foam molding resin composition according to any one of claims 1 to 17.

20. A foam electric wire comprising:

    a conductor; and
    a foam insulating layer on the conductor,
    the foam insulating layer being formed using the foam molding resin composition according to any one of claims 1 to 17.

FIG.1

FIG.2

## INTERNATIONAL SEARCH REPORT

| International application No. |
|---|
| **PCT/JP2025/002741** |

**A. CLASSIFICATION OF SUBJECT MATTER**

*C08J 9/12*(2006.01)i; *B32B 5/18*(2006.01)i; *B32B 27/30*(2006.01)i; *C08F 8/20*(2006.01)i; *C08F 14/18*(2006.01)i; *C08K 3/38*(2006.01)i; *C08K 5/52*(2006.01)i; *C08K 5/521*(2006.01)i; *C08L 27/12*(2006.01)i; *C08L 101/00*(2006.01)i; *H01B 7/02*(2006.01)i

FI:    C08J9/12 CEW; B32B5/18; B32B27/30 D; C08F8/20; C08F14/18; C08K3/38; C08K5/52; C08K5/521; C08L27/12; C08L101/00; H01B7/02 G; H01B7/02 Z

According to International Patent Classification (IPC) or to both national classification and IPC

**B. FIELDS SEARCHED**

Minimum documentation searched (classification system followed by classification symbols)

C08J9/12; B32B1/00-43/00; C08K3/38; C08K5/52; C08K5/521; C08L27/12; C08L101/00; H01B7/02

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2010-539252 A (DAIKIN INDUSTRIES, LTD.) 16 December 2010 (2010-12-16) claims, paragraphs [0010]-[0020], [0032], [0037], [0054]-[0057], [0070]-[0076], example 2 | 1-20 |
| A | WO 2006/123694 A1 (DAIKIN INDUSTRIES, LTD.) 23 November 2006 (2006-11-23) claims, paragraphs [0019]-[0020], [0031]-[0033], [0035]-[0036], [0050]-[0056], examples 2, 3, 5 | 1-20 |
| A | WO 2016/002887 A1 (ASAHI GLASS COMPANY, LIMITED) 07 January 2016 (2016-01-07) claims, paragraphs [0002]-[0003], [0036], [0043], [0053]-[0063] | 1-20 |
| A | JP 7-169334 A (FURUKAWA ELECTRIC CO., LTD.) 04 July 1995 (1995-07-04) claims, paragraphs [0010]-[0014] | 1-20 |

☐ Further documents are listed in the continuation of Box C.          ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **10 April 2025** | **22 April 2025** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2025/002741**

| Patent document cited in search report | | | Publication date (day/month/year) | Patent family member(s) | | | Publication date (day/month/year) |
|---|---|---|---|---|---|---|---|
| JP | 2010-539252 | A | 16 December 2010 | US 2011/0272173 A1 claims, paragraphs [0016]-[0028], [0045]-[0046], [0051]-[0053], [0083]-[0089], [0112]-[0122], example 2 WO 2009/044753 A1 | | | |
| WO | 2006/123694 | A1 | 23 November 2006 | US 2009/0044965 A1 claims, paragraphs [0033]-[0038], [0072]-[0078], [0084]-[0089], [0125]-[0145], examples 2, 3, 5 EP 1887040 A1 CN 101163739 A | | | |
| WO | 2016/002887 | A1 | 07 January 2016 | US 2017/0101529 A1 claims, paragraphs [0002]-[0006], [0111]-[0112], [0130]-[0131], [0156]-[0177] EP 3165568 A1 CN 106661297 A | | | |
| JP | 7-169334 | A | 04 July 1995 | (Family: none) | | | |

Form PCT/ISA/210 (patent family annex) (July 2022)

**REFERENCES CITED IN THE DESCRIPTION**

**Patent documents cited in the description**

- JP 2019112563 A
- CN 116144127 A
- WO 2006123694 A
- US 4764538 A
- WO 2019168183 A